# EUROPÄISCHE PATENTSCHRIFT

(11) **EP 2 500 676 B1**
(45) Veröffentlichungstag und Bekanntmachung des Hinweises auf die Patenterteilung: **03.07.2019**
(21) Anmeldenummer: 11002089.8
(22) Anmeldetag: 14.03.2011
(51) Int. Cl.: F25B 13/00, F25B 30/02, F25B 31/00, F25B 41/04

(54) **Wärmepumpe**
Heat pump
Pompe à chaleur

(43) Veröffentlichungstag der Anmeldung: 19.09.2012
(73) Patentinhaber: Stiebel Eltron GmbH & Co. KG, 37603 Holzminden (DE)
(72) Erfinder: Schiefelbein, Kai, Dr., 37671 Höxter (DE); Brugmann, Johannes, Dr., 37671 Höxter (DE); Schaumlöffel, Michael, 37671 Höxter (DE); Smollich, Steffen, 37603 Holzminden (DE); Wagner, Enno, Dr., 37699 Fürstenberg (DE); Hildebrandt, Silvia, 37671 Höxter (DE)

(56) Entgegenhaltungen:
- EP-A1- 0 933 603
- EP-A1- 2 083 229
- EP-A1- 2 088 388
- EP-A1- 2 131 122
- EP-A2- 1 037 001
- EP-A2- 2 026 019
- WO-A1-93/24795
- DE-A1- 3 119 436
- DE-A1-102005 034 826
- DE-A1-102008 016 577
- KR-B1- 100 830 404
- Oertli: "Heizen und Kühlen mit energieeffizienten Wärmepumpen" In: November 2008 (2008-11), XP002655589, Seiten 1-16, * Seiten 4,6 *

## Beschreibung

Die vorliegende Erfindung betrifft eine Wärmepumpe, ein Verfahren zum Betreiben einer Wärmepumpe sowie ein Verfahren zum Installieren einer Wärmepumpe.

Wärmepumpen sind allgemein bekannt, sie werden dazu verwendet, thermische Energie aus einem Bereich niedrigerer Temperatur, insbesondere einem Außenbereich außerhalb eines Gebäudes in einen Bereich höherer Temperatur, insbesondere einen Innenbereich oder Wohnbereich eines Gebäudes zu transportieren und dort zum Heizen zu verwenden. Das zugrunde liegende physikalische Prinzip ist allgemein bekannt und wird im Grunde auch bei einem Kühlschrank eingesetzt. Unter dem Begriff Wärmepumpe wird aber insbesondere eine Anordnung zum Erwärmen eines Gebäudes verstanden.

Eine Wärmepumpe weist einen Kältemittelkreislauf mit vier grundsätzlichen Elementen auf, nämlich einem Verdichter, einem Kondensator, einer Drossel und einem Verdampfer, die über ein Leitungssystem miteinander verbunden sind, in dem ein Kältemittel zirkuliert.

Der Verdichter komprimiert das Kältemittel und erhöht dabei dessen Druck. Am Ausgang des Verdichters ist das Kältemittel meist gasförmig und wird in den Kondensator geleitet. Im Kondensator kondensiert das Kältemittel zumindest teilweise und gibt dabei Wärme ab. Der Kondensator gibt somit diese Wärme beispielsweise an einen Heizungskreislauf ab.

Vom Kondensator wird das Kältemittel weiter zu einer Drossel geleitet, die den Druck des Kältemittels reduziert, wobei sich an die Drossel üblicherweise direkt der Verdampfer anschließt, so dass das druckreduzierte Kältemittel in dem Verdampfer verdampft und dabei Wärmeenergie in dem Verdampfer und damit aus der Umgebung des Verdampfers aufnimmt. Je nach Auslegung der Wärmepumpe und je nach verwendetem Kältemittel kann das Kältemittel hier, obwohl es thermische Energie aufgenommen hat, Temperaturen von beispielsweise -10°C aufweisen. Das Kältemittel wird vom Verdampfer weiter zum Verdichter geleitet, wodurch sich der Kältemittelkreislauf schließt.

Eine Wärmepumpe ist nicht zuletzt vorgesehen, um möglichst energiesparend ein Gebäude zu beheizen. Hier liegt auch der Gedanke zugrunde, dass eine weitere Abkühlung eines Außenbereichs, was beispielsweise den Erdboden im Falle der Ausnutzung von Erdwärme betreffen kann, kaum auffällt und von allein leicht ausgeglichen wird. Insoweit besteht das Bestreben, Wärmepumpen insbesondere auch energetisch zu verbessern.

EP 2 026 019 A2 bezieht sich auf eine Temperiereinrichtung auf Wärmepumpenbasis, bei der Anschlussleitungen an einem zweiten Wärmeaustauscher über Umschaltventile geführt sind, die für eine Strömungsrichtungsumkehr des Kältemediums bzw. des Wärmetransportmediums im zweiten Wärmeaustauscher umschaltbar sind.

KR 100 830 404 B1 bezieht sich auf ein Split-Wärmepumpensystem mit einer in der ersten Einheit befindlichen Verdichter- und Expansionseinrichtung und einem Verflüssiger sowie auf einem in einer zweiten Einheit befindlichen Verdampfer.

Der Werbeprospekt der OERTLI-ROHLEDER Wärmetechnik GmbH "Heizen und Kühlen mit energieeffizienten Wärmepumpen" (November 2008, XP002655589, S. 4 + 6) bezieht sich auf beispielsweise Luft -Wasser Wärmepumpen in Split-Ausführung. Bei dieser Ausführung werden zwei Gehäuse getrennt voneinander aufgestellt. Der Verdampfer steht im Freien und der Verdichter steht im Gebäude.

Aus EP 2 088 388 A1 geht ein Wärmepumpensystem mit zwei Kompressoren hervor, die in Reihe geschaltet sind. Die beiden Kompressoren sind auch als drehzahlvariable Kompressoren betreibbar und sind mit einem Öl-Ausgleichssystem verbunden, durch welches eine zuverlässige Schmierung der Verdichter gewährleistet ist.

DE 10 2008 016 577 A1 beschreibt eine Wärmepumpeneinrichtung für eine energieeffiziente Erzeugung von Wärme. Diese umfasst eine Kompaktwärmepumpe in der Größe eines Elektrospeicherheizgerätes, wobei die Kompaktwärmepumpe ein Gehäuse aufweist, in dem zumindest ein Verdichter und ein Kondensator angeordnet sind. Das Gehäuse weist einen schallisolierten Teilbereich auf, in dem der Verdichter angeordnet ist.

Aus DE 10 2005 034 826 A1 geht eine Wärmepumpe sowie ein Verfahren zum Betrieb einer Wärmepumpe hervor. Um bei einer Wärmepumpe ein möglichst rasches Abtauen eines Verdampfers zu erreichen, ist die Abtauung mithilfe eines beim Kreisprozess der Wärmepumpe erzeugten Heißgases vorgesehen, welches zusätzlich durch eine elektrische Zusatzheizung erwärmt wird.

DE 31 19 436 A1 offenbart ein Verfahren zur Gewinnung von Umweltwärme zu Heizzwecken. So wird ein Kältemittelkreislauf eingesetzt, bei dem im Verdampfer Kältemitteldampf mit flüssiger Phase erzeugt wird, und aus dem Verdampfer austretendes, nicht verdampftes Kältemittel zur Kühlung verwendet wird und durch die Wärmeaufnahme aus dem Verdichter der Kältemitteldampf überhitzt wird.

Aus EP 2 083 229 A1 geht ein Heizsystem hervor, welches einen Außenraum-Wärmeaustauscher und einen Innenraum-Wärmeaustauscher aufweist.

Aus WO 93/24795 geht ein Gefriergerät hervor, mit dem der Anstieg eines Hochdrucks im Kältemittelkreislauf kontrolliert wird und ein Flüssigkeitsrückfluss verhindert wird.

EP 2 131 122 A1 offenbart ein Wärmepumpensystem mit einer Heizeinheit, welche einen Kompressor, ein Vier-Wege Ventil und einen Heizungswärmeaustauscher aufweist. Ein Wärmeaustauscher zur Wärmeaufnahme ist außerhalb der Wärmeerzeugungseinheit angeordnet.

In einer grundsätzlichen Ausführungsart werden Wärmepumpen als sogenannte Split-Geräte vorgeschlagen. Demnach sind die oben beschriebenen vier Elemente des Kühlkreislaufes auf zwei Geräte verteilt, nämlich ein Innengerät, das in einem Gebäude innen anzuordnen ist und ein Außengerät, das außen außerhalb des Gebäudes anzuordnen ist. Dabei wird üblicherweise der Kondensator in dem inneren Gerät, also im Gebäude angeordnet, wohingegen die Drossel, der Verdampfer und der Verdichter im Außengerät angeordnet sind. Damit sind die kalten Bereiche, in Strömungsrichtung des Kältemittels gesehen der Bereich hinter der Drossel, über den Verdampfer und bis zum Verdichter außerhalb des Gebäudes angeordnet. Etwaige Probleme durch sehr kalte Leitungen werden vermieden.

Um einen Wärmeübergang am Verdampfer zu verbessern, ist häufig ein Lüfter vorgesehen, der zu einem Luftstrom entlang des Verdampfers führen soll.

Sowohl der Verdichter als auch der Lüfter bedingen in ihrem Betrieb eine Geräuschentwicklung, die unter Umständen zu einer Lärmbelästigung werden kann. Dabei kann die Art der erzeugten Geräusche zwischen dem Verdichter und dem Lüfter ganz unterschiedlich sein. Der Lüfter neigt zu einem gleichmäßigen Rauschen, wohingegen ein Verdichter häufig ein vergleichsweise höherfrequentes Spektrum aufweist.

Der Erfindung liegt somit die Aufgabe zugrunde, wenigstens eines der oben genannten Probleme zu beheben oder zu verringern, insbesondere soll eine Wärmepumpe verbessert und Geräuschimmission verringert werden. Zumindest soll eine alternative Lösung vorgeschlagen werden.

Erfindungsgemäß wird somit eine Wärmepumpe gemäß Anspruch 1 vorgeschlagen. Diese fasst einen Verdichter, einen Kondensator, eine Drossel und einen Verdampfer wie oben zum Stand der Technik bereits erläutert wurde. Der Kondensator kann auch als Verflüssiger und/oder Platten-Wärmeübertrager bezeichnet werden. Die Drossel wird auch als Expansionsventil bezeichnet, und der Verdampfer kann als Lamellen-Wärmeübertrager ausgeführt sein.

Eine Steuerelektronik ist zum Steuern des Verdichters vorgesehen, insbesondere eine Steuerelektronik die einen Frequenzumrichter aufweist, der den Verdichter, nämlich die Drehzahl des Verdichters, steuert. Dazu wird erfindungsgemäß vorgeschlagen, einen in den Kältemittelkreislauf eingebundenen ersten Wärmeübertrager zum Kühlen der Steuerelektronik mittels des Kältemittels einzusetzen. Dieser erste Wärmeübertrager wird somit in den Kältemittelkreislauf integriert. Das Kältemittel strömt durch diesen ersten Wärmeübertrager, der an der Steuerelektronik vorgesehen ist, um die Steuerelektronik zu kühlen.

Insbesondere ist dieser erste Wärmeübertrager in dem Kältemittelkreislauf zwischen dem Kondensator und der Drossel angeordnet und wird somit im Wesentlichen oder vollständig von flüssigem Kältemittel durchströmt, das dadurch gut Wärme von der Steuerelektronik aufnehmen und abführen kann.

Die Wärmepumpe weist ein Innengerät und ein Außengerät auf und ist somit als Split-Gerät ausgeführt. Es wird hierbei erfindungsgemäß vorgeschlagen, den Verdichter im Innengerät anzuordnen. Der Verdichter soll also bestimmungsgemäß im Gebäude angeordnet werden. Dabei wurde erkannt, dass es möglich ist, eine entsprechende, insbesondere entsprechend lange Kühlmittelleitung vom Verdampfer im Außengerät zum Verdichter im Innengerät vorzusehen. Durch die Anordnung des Verdichter im Innengerät und damit im Gebäude, kann jedenfalls für das von dem Verdichter erzeugte Geräusch eine Schallimmission in die Umwelt signifikant reduziert werden und je nach konkreter Ausgestaltung sogar vollständig vermieden werden. Durch die Anordnung des Verdichters in einem Gebäude kann zudem auf eine elektrische Ölsumpfheizung verzichtet werden, weil durch die Installation im Gebäude ein Einfrieren des Ölsumpfs nicht zu erwarten ist. Zudem schafft die Anordnung im Gebäude eine erhöhte Wartungsfreundlichkeit, weil der Verdichter besser zugänglich angeordnet und insbesondere witterungsunabhängig installiert, gewartet und/oder repariert werden kann.

Durch die Verringerung der Geräuschimmission ist es nun möglich, den Verdichter drehzahlvariabel auszuführen, was gemäß der Erfindung vorgeschlagen wird. Unter drehzahlvariabel ist hierbei zu verstehen, dass der Verdichter, der auch als Kompressor bezeichnet werden kann, einen Motor beinhaltet, der im Betrieb entsprechend eine Drehzahl aufweist. Durch die Veränderung der Drehzahl dieses Motors und damit die Veränderung der Drehzahlen des Verdichters kann die Verdichtungsarbeit bzw. Verdichtungsleistung verändert werden. Insbesondere wird vorgeschlagen, die Drehzahl abhängig von der Außentemperatur und der Temperatur eines sich anschließenden Heizkreises zu steuern, der zum Heizen eines Gebäudes eingesetzt wird und die durch die Wärmepumpe bereitgestellte Wärme entsprechend im Gebäude verteilt.

Eine weitere Ausgestaltung schlägt vor, dass eine Kondensatwanne zum Auffangen von Kondensat vom Verdampfer vorgesehen ist. Diese Kondensatwanne ist somit im Wesentlichen unterhalb des Verdampfers angeordnet und Kondensat, nämlich insbesondere Feuchtigkeit aus der Umgebungsluft, kann in diese Kondensatwanne lecken oder laufen um von dort abgeführt, nämlich entsorgt zu werden. Um ein Einfrieren der Kondensatwanne zu verhindern, wird vorgeschlagen, einen zweiten Wärmeübertrager zum Wärmen der Kondensatwanne vorzusehen, wobei dieser zweite Wärmeübertrager in den Kältemittelkreislauf eingebunden ist und somit die Kondensatwanne mittels des Kältemittels wärmt.

In Kombination mit dem ersten Wärmeübertrager, der eine Steuerelektronik zum Steuern des Verdichters kühlt, ergibt sich eine energetisch günstige Situation, in der Wärme aus der Steuerelektronik in das Kältemittel abgegeben und von diesem zum zweiten Wärmeübertrager transportiert und dort zum Wärmen der Kondensatwanne verwendet wird.

Erfindungsgemäß ist zudem ein Zwischenwärmeübertrager vorgesehen, der thermisch mit dem Kondensator verbunden ist und über den Kältemittel, das bereits aus dem Kondensator ausgetreten ist, geführt wird. Hierbei wird vorzugsweise dem Zwischenwärmeübertrager ein Expansionsventil, insbesondere ein elektronisch geregeltes Ventil, vorgelagert, das als Druckreduzierer fungiert und auch als Zwischeneinspritzer bezeichnet werden kann. Die Zwischeneinspritzung sorgt für eine Teilentspannung des Kältemittels, beispielsweise im Sinne einer Druckreduzierung vom 30 auf 10 bar, was nur ein beispielhafter Wert ist, wobei im nachgeschalteten Zwischenwärmeübertrager eine Verdampfung stattfinden kann. Vorzugsweise wird der hierbei entstehende Dampf überhitzt sein und als überhitzter Dampf bezeichnet. Dieser überhitzte Dampf kann dem Verdichter zugeführt werden. Eine Zuführung zu dem Verdichter erfolgt beispielsweise so, dass die Dampfeinspritzung einer Zwischenkühlung des Kältemittels auf einem mittleren Druckniveau entspricht..

Erfindungsgemäß wird eine Wärmepumpe vorgeschlagen, die einen Sammelbehälter aufweist. Dieser Sammelbehälter ist in einem ersten Betriebszustand der Wärmepumpe dazu vorbereit, aus einer ersten Leitung zugeführtes Kältemittel zu sammeln und über eine zweite Leitung das Kältemittel im flüssigen Zustand abzugeben. Dabei ist der Sammelbehälter dazu vorbereitet, bidirektional betrieben zu werden, so dass Kältemittel in einem zweiten Betriebszustand aus der zweiten Leitung zugeführt und über die erste Leitung im flüssigen Zustand abgegeben wird. Der Sammelbehälter kann somit in zwei Richtungen betrieben werden, wobei in jedem Falle sichergestellt wird, dass flüssiges Kältemittel abgegeben wird. Vorzugsweise ist dieser Sammelbehälter - in Strömungsrichtung gesehen - vor einem elektronisch geregelten Expansionsventil und vor dem beschriebenen Zwischenwärmeübertrager angeordnet.

Somit wird ein Sammelbehälter für flüssiges Kältemittel vorgeschlagen, der in beiden Richtungen gleichermaßen durchströmt werden kann und der als "Bi-Flow-Receiver" bezeichnet werden kann. Die Funktionsfähigkeit in beiden Richtungen wird dadurch realisiert, dass der Sammelbehälter aus zwei Kammern besteht, die mit einem Blech voneinander getrennt sind, das im unteren Bereich eine kleine Öffnung aufweist, durch die flüssiges Kältemittel von einer Kammer in die andere strömen kann. Auf diese Weise wird verhindert, dass sogenanntes Flashgas, also Dampf unmittelbar von der gegenüberliegenden Leitung angesaugt werden kann. Der Vorteil einer solchen Ausführung liegt darin, dass der Kältekreis vereinfacht werden kann und zwei Rückschlagventile bzw. Rückschlagklappen eingespart werden können.

Gemäß einer Ausgestaltung ist der Verdichter, der Kondensator und der erste Wärmeübertrager zum Kühlen der Steuerelektronik in dem Innengerät angeordnet und die Drossel, der Verdampfer und der zweite Wärmeübertrager zum Wärmen der Kondensatwanne in dem Außengerät angeordnet. Das Innengerät und das Außengerät werden über eine erste und eine zweite Kältemittelleitung zum Führen des Kältemittels miteinander verbunden.

Es sei angemerkt, dass die obigen Ausführungen zur Funktionsweise der Wärmepumpe grundsätzlich den Heizbetrieb betreffen, bei dem also Wärme aus der Umgebung im Verdampfer im Außengerät aufgenommen und im Gebäude im Kondensator abgegeben wird. Grundsätzlich kann eine solche Wärmepumpe auch in umgekehrter Richtung betrieben werden, so dass Wärme im Kondensator aufgenommen und beim Verdampfer abgegeben wird, wobei der Kondensator und der Verdampfer hierfür gegebenenfalls nicht optimal ausgelegt sind und auch die Gerätebezeichnung Kondensator bzw. Verdampfer für diesen Betrieb im Grunde unzutreffend wäre.

Vorzugsweise wird eine Wärmepumpe vorgeschlagen, die einen Umschalter zum Umschalten von einem Heizbetrieb in einen Kühlbetrieb aufweist. Dabei ist in dem Innengerät ein Strömungsgleichrichter vorgesehen, der einen Kältemittelaustausch zwischen dem Innengerät und dem Außengerät so steuert, dass das Kältemittel sowohl im Heizbetrieb als auch im Kühlbetrieb zwischen dem Innengerät und dem Außengerät durch die erste Kältemittelleitung immer in einer ersten und durch die zweite Kältemittelleitung immer in einer zweiten Richtung strömt. Beim Umschalten von Heizbetrieb auf Kühlbetrieb ändert sich somit die Strömungsrichtung des Kältemittels in den Kältemittelleitungen, die das Innengerät und das Außengerät verbinden, nicht.

Durch die Verwendung des Strömungsgleichrichters können unter anderem thermische Verluste beim Abtauen des Verdampfers auftreten, was ansonsten durch eine Kreisprozessumkehr vorgenommen werden kann, minimiert werden. Zudem wird ein hoher Temperatursprung in wenigstens einer der Verbindungsleitungen zwischen Außengerät und Innengerät vermieden.

Erfindungsgemäß wird zudem ein Verfahren zum Betreiben einer Wärmepumpe gemäß Anspruch 5 vorgeschlagen. Demnach wird vorgeschlagen, eine wie oben beschriebene Wärmepumpe gemäß wenigstens einer der beschriebenen Ausführungsformen zu betreiben, wobei die Drossel zusammen mit dem Verdampfer in dem Außengerät betrieben wird und der Verdichter zusammen mit dem Kondensator in dem Innengerät betrieben wird. Es ist vorgesehen, dass der Verdichter drehzahlvariabel betrieben wird, insbesondere in Abhängigkeit von der Außentemperatur und/oder einer Heiztemperatur.

Erfindungsgemäß wird zudem ein Verfahren zum Installieren einer erfindungsgemäßen Wärmepumpe vorgeschlagen, wobei die Installation so erfolgt, dass das Innengerät in einem Gebäude, insbesondere in einem Wohngebäude, installiert wird, das Außengerät außerhalb des Gebäudes installiert wird und das Innengerät und das Außengerät über eine erste und eine zweite Kältemittelleitung zum Führen des Kältemittels miteinander verbunden werden.

Nachfolgend wird die Erfindung anhand von Ausführungsbeispielen unter Bezugnahme auf die begleitenden Zeichnungen exemplarisch erläutert.
Figur 1 zeigt schematisch ein Schaubild einer Wärmepumpe.
Figur 2 zeigt ein Schaubild einer Wärmepumpe gemäß einer weiteren Ausführungsform.
Figur 3 zeigt eine Wärmepumpe schematisch gemäß einer noch weiteren Ausführungsform.

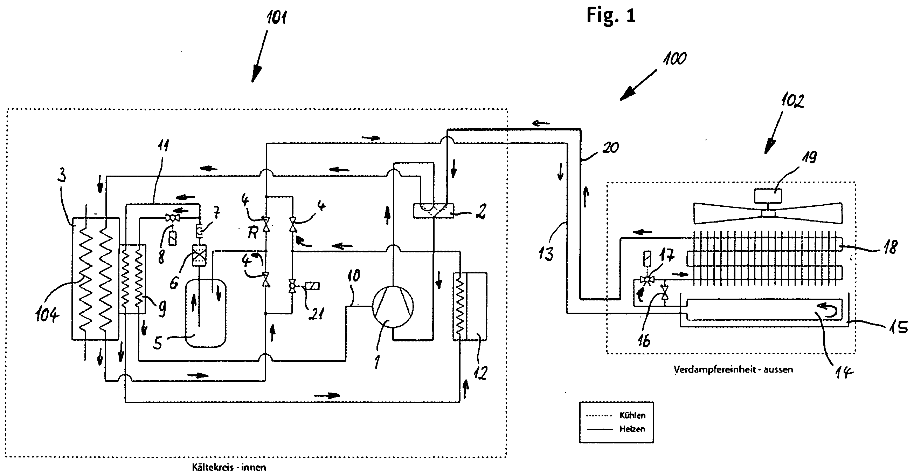

Nachfolgend werden teilweise auch für gleiche aber nicht identische Elemente, insbesondere ähnliche Elemente unterschiedlicher Ausführungsformen gleiche Bezugszeichen verwendet, um jeweils die gleiche oder ein ähnliche Funktionalität zu unterstreichen. Die in Figur 1 eingezeichneten Strömungspfeile illustrieren die Strömungsrichtung des Kältemittels für den Heizbetrieb.

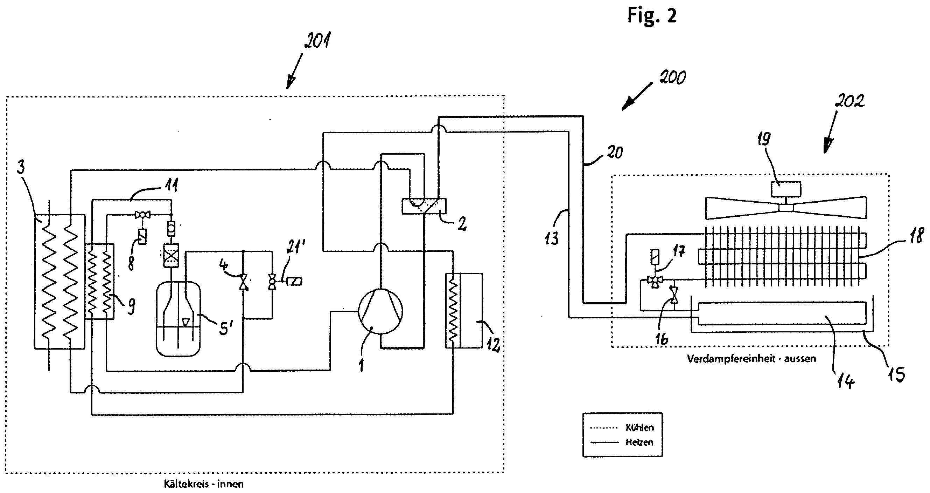

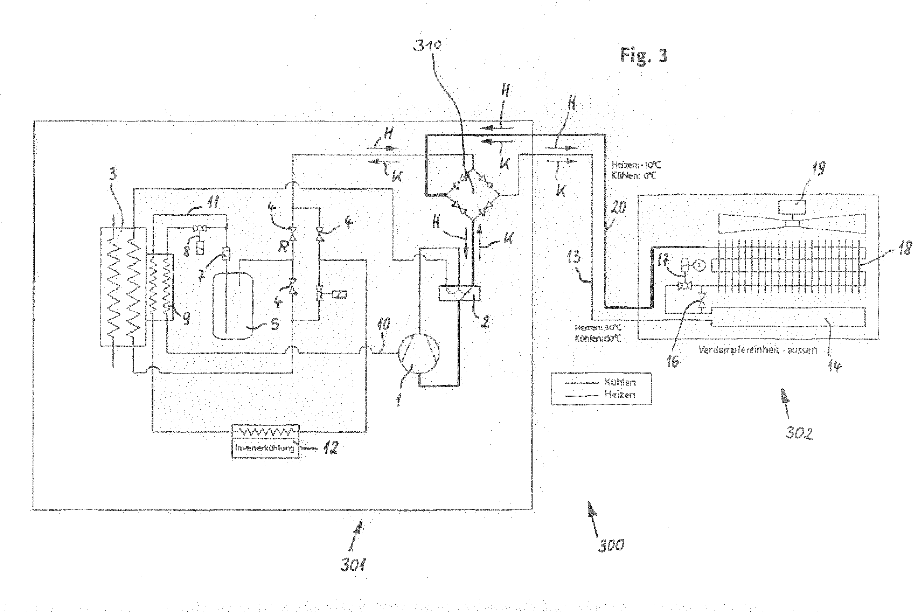

Die Wärmepumpe 100 der Figur 1 ist - wie auch die Wärmepumpen gemäß der Figuren 2 und 3 - als sogenanntes Split-Gerät ausgeführt. Bei einem Split-Gerät einer Wärmepumpe ist die Wärmepumpe in ein Innengerät und ein Außengerät unterteilt, wobei das Außengerät zumindest einen Verdampfer und das Innengerät zumindest einen Verflüssiger aufweist. Die Wärmepumpe 100 der Figur 1 weist ein Innengerät 101 und ein Außengerät 102 auf. Ein gestricheltes Rechteck grenzt jeweils das Innengerät 101 bzw. das Außengerät 102 ab. Verbunden ist das Innengerät 101 mit dem Außengerät 102 über zwei Splitleitungen, nämlich die dünn dargestellte Kältemittelsplitleitung 13 und die fett dargestellte Kältemittelleitung 20.

Nachfolgend wird zunächst die Funktionsweise der Wärmepumpe 100 für den Fall des Heizbetriebes beschrieben. Ein Verdichter 1, der drehzahlvariabel betrieben wird, verdichtet ein Kältemittel und leitet dieses über das 4/2-Wege-Umschaltventil 2 zu einem Eingang des Platten-Wärmeübertragers 3, der auch als Verflüssiger bezeichnet werden kann. In dem Platten-Wärmeübertrager 3 erfolgt eine Wärmeübertragung auf einen Wasserkreislauf 104, an die beispielsweise eine Heizung angeschlossen werden soll, was in der Figur nicht weiter dargestellt ist. In dem Platten-Wärmeübertrager 3 wird Dampf eingeleitet und es tritt, gemäß der Darstellung der Figur 1 nach unten, Flüssigkeit aus. Die Flüssigkeit wird mittels einer Leitung über eines der Ventile 4, die auch als Rückschlagklappen 4 bezeichnet werden können, in den Kältemittelsammler 5 weitergeführt. Von dort aus wird das im Wesentlichen flüssige Kühlmedium, das auch als Kältemittel bezeichnet wird, über den Filtertrockner 6 und das Schauglas 7 an einen Zwischen-Wärmeübertrager 9 weitergeleitet wird.

Dabei wird das Kältemittel in Strömungsrichtung hinter dem Schauglas 7 in einen Hauptmassenstrom 11 und einen weiteren Strom, der durch das Expansionsventil 8 fließt, aufgeteilt. Der abgeteilte Kältemittelstrom, der durch das elektronisch gesteuerte Expansionsventil 8 fließt, wird auf einen mittleren Druck entspannt und zum Zwischen-Wärmeübertrager 9 geleitet und anschließend über eine Dampfeinspritzung 10 dem Verdichter 1 zugeführt und dort wieder verdichtet.

Der Hauptmassenstrom 11 wird nach Austritt aus dem Zwischen-Wärmeübertrager 9 einem Wärmeübertrager der Inverterelektronik 12 zugeführt, nämlich einem Wärmeübertrager, der zum Kühlen eines elektronischen Schaltkreises, insbesondere nämlich eines Frequenzumrichters zugeführt wird. Dieser Frequenzumrichter, der auch als Inverter bezeichnet werden kann, ist zum Steuern des drehzahlvariablen Verdichters 1 vorgesehen. In dem Wärmeübertrager der Inverterelektronik 12 nimmt das Kältemittel somit Wärmeenergie aus dem Inverter auf und kühlt somit den Inverter.

Aus dem Wärmeübertrager der Inverterelektronik 12 gelangt das Kältemittel weiter über eines der Rückschlagklappen 4 zur dünn gezeichneten Kältemittel-Splitleitung 13. Hierbei verlässt das Kältemittel das Innengerät 101 und wird von der dünnen Kältemittelleitung 13 zum Außengerät 102 geführt. Dort gelangt das Kältemittel zunächst in den Wärmeübertrager 14 in der Kondensatwanne 15, um von dort aus weiter über das elektronisch geregelte Expansionsventil 17 zum Verdampfer zu gelangen. Der Verdampfer 18 wird durch Außenluft erwärmt, die durch Unterstützung des Lüfters 19 zugeführt wird. Hierbei kann sich Kondensat an dem Verdampfer 18 bilden, das in die Kondensatwanne 15 lecken oder laufen kann. In der Kondensatwanne 15 wird somit Kondensat von dem Verdampfer 18 aufgefangen und kann abgeführt werden. Um ein Gefrieren des Kondensats in der Kondensatwanne 15 zu verhindern, wird hier die Verwendung des Wärmeübertragers 14 zum Wärmen der Kondensatwanne 15 vorgeschlagen.

Das Kältemittel nimmt somit in dem Verdampfer 18, der als Lamellen-Wärmeübertrager ausgeführt ist, Wärmeenergie auf und wird über die dicke Kältemittelssplitleitung 20 aus dem Außengerät 102 zum Innengerät 101 geführt. Im Innengerät 101 gelangt das Kältemittel von dieser dicken Kältemittelsplitleitung 20 über das 4/2-Wege-Umschaltventil 2 zum drehzahlgeregelten Verdichter 1.

Wird die Wärmepumpe 100 zum Kühlen verwendet, wird das 4/2-Wege-Umschaltventil 2 entsprechend umgeschaltet. Dadurch wird das Kältemittel von dem drehzahlvariablen Verdichter 1 nicht mehr durch den Platten-Wärmeübertrager 3 gemäß gezeigten Fließrichtungen gedrückt, sondern in entgegengesetzte Richtung gesogen. Das Kältemittel gelangt dann von dem Verdichter 1 durch das Umschaltventil 2 über die dicke Kältemittelsplitleitung 20 zum Außengerät 102 und dort durch den Verdampfer 18, in dem das Kältemittel dann Wärme abgibt. Vom Verdampfer 18 gelangt das Kältemittel über das Ventil, nämlich die Rückschlagklappe 16 durch den Wärmeübertrager 14 in der Kondensatwanne 15 und die dünne Kältemittelsplitleitung 13 zurück in das Innengerät 101. Dort wird es über das mit R bezeichnete Ventil bzw. Rückschlagklappe 4 in den Kältemittelsammler 5 geführt. In dem Kältemittelsammler 5 verläuft auch im Fall der Verwendung der Wärmepumpe 100 zum Kühlen die Flussrichtung des Kältemittels in dieselbe Richtung wie im Falle des Heizens, nämlich vom Kältemittelsammler 5 über den Filtertrockner 6 und das Schauglas 7 zum Zwischen-Wärmeübertrager 9. Vom Zwischenübertrager 9 gelangt das Kältemittel über den Wärmeübertrager der Inverterelektronik 12 über das elektronisch geregelte Expansionsventil zum Kühlen 21 zum Platten-Wärmeübertrager, nämlich in umgekehrter Richtung im Vergleich zum Heizbetrieb.

Die in Figur 1 veranschaulichte Wärmepumpe 100 zeichnet sich dadurch aus, dass sie als Split-Gerät ausgeführt ist, nämlich ein Innengerät 101 und ein Außengerät 102 aufweist, wobei der Verdichter 1 im Innengerät 101 angeordnet ist. Hierdurch ist es möglich, einen drehzahlvariablen Verdichter einzusetzen, der aufgrund seiner hohen, insbesondere wechselnden Geräuschimmission bei bisherigen Split-Geräten im Außengerät vermieden wurde. Durch die Anordnung im Innengerät kann nun auch ein drehzahlvariabler Verdichter anstelle eines drehzahlstarren, monoton laufenden Verdichters eingesetzt werden.

Für die Ansteuerung dieses drehzahlvariablen Verdichters ist eine Steuerelektronik, nämlich insbesondere ein Frequenzumrichter bzw. Inverter vorgesehen, der auf effiziente Weise in dem Wärmeübertrager der Inverterelektronik 12 mit dem zirkulierenden Kältemittel gekühlt werden kann. Das Kältemittel nimmt hierdurch Wärme auf.

In dem Außengerät 102 wird zudem ein Wärmeübertrager 14 in der Kondensatwanne 15 vorgeschlagen. Durch diesen Wärmeübertrager 14 wird ein Einfrieren von Kondensat in der Kondensatwanne 15 vermieden. Hierdurch wird im Übrigen ein wärmeenergetisches Konzept vorgeschlagen, bei dem die Wärmeenergie oder ein Teil davon, die durch Kühlung der Elektronik in dem ersten Wärmeübertrager, nämlich dem Wärmeübertrager der Inverterelektronik 12 von dem Frequenzumrichter aufgenommen wurde, in dem zweiten Wärmeübertrager, nämlich den Wärmeübertrager 14 in der Kondensatwanne 15 abgegeben werden kann. Es stellen sich somit vorteilhafte Synergieeffekte durch diesen ersten und zweiten Wärmeübertrager 12 bzw. 14 ein. Mit anderen Worten kann die durch die Ansteuerung des drehzahlvariablen Verdichters entstehende Wärme zum Beheizen der Kondensatwanne 15 verwendet werden.

Vorzugsweise wird somit eine Kombination vorgeschlagen, bei der eine Wärmepumpe 100 verwendet wird, die ein Innengerät 101 und ein Außengerät 102 aufweist, wobei ein drehzahlgeregelter Verdichter vorgeschlagen wird, der in dem Innengerät 101 vorgesehen ist. hierdurch wird ein sogenannten Split-Gerät ermöglicht, das im Innengerät einen drehzahlgeregelten Verdichter aufweist und dadurch einen Verdichter für ein Split-Gerät vorschlägt, der Außentemperatur und Heiztemperatur berücksichtigt und seine Drehzahl und entsprechend die Verdichtung davon abhängig steuern kann.

Hierdurch ergeben sich insbesondere Vorteile hinsichtlich Lärmbelastung, die durch die Anordnung im Innengerät zumindest reduziert werden kann. Weiterhin werden Probleme ungünstiger Temperaturen, nämlich zu niedrige Temperaturen für einen Ölsumpf des Verdichters 1 vermieden. Durch die Anordnung des Verdichters 1 im Innengerät 101 wird zudem eine Wartungsfreundlichkeit erreicht oder zumindest begünstigt, weil zumindest der Verdichter bei Anordnung im Innenbereich leichter zugänglich ist als im Außenbereich.

Figur 2 zeigt eine weitere Ausführungsform einer Wärmepumpe 200, die ein Innengerät 201 und ein Außengerät 202 aufweist. Die Ausführungsform der Figur 2 unterscheidet sich im Wesentlichen von der der Figur 1 darin, dass ein bidirektional betreibbarer Kältemittelsammler 5' verwendet wird. Somit ergeben sich im Betrieb im Wesentlichen Änderungen gegenüber dem Betrieb der Ausführung gemäß Figur 1 beim Kühlen. Beim Kühlen erfolgt nämlich eine Umkehr des Kältemittelstroms in dem Kältemittelsammler 5', wohingegen der Kältemittelstrom im Kältemittelsammler 5 der Figur 1 beim Heizen und Kühlen in derselben Richtung verläuft. Beim Kühlen verläuft in der Wärmepumpe 200 und dort im Innengerät 201 der Kühlmittelstrom von der dünnen Kältemittelsplitleitung 13 aus dem Außengerät 202 kommend zunächst durch den ersten Wärmeübertrager, nämlich den Wärmübertrager der Inverterelektronik 12, nämlich gemäß Figur 2 von oben nach unten. Von dem Wärmeübertrager der Inverterelektronik 12 gelangt das Kältemittel in den Zwischen-Wärmeübertrager 9 und von dort, gemäß Figur 2 in aufwärtiger Richtung, durch das Schauglas 7 und den Filtertrockner 6 in den Kältemittelsammler 5'. Von dort wird der Kältemittelstrom über das elektronisch geregelte Expansionsventil zum Kühlen zum Platten-Wärmeübertrager 3 geführt.

Die übrigen Funktionen und Wege und Strömungsrichtungen des Kältemittels entsprechen denen im Zusammenhang mit der Ausführungsform gemäß Figur 1 beschriebenen.

Auch die Ausführungsform gemäß Figur 2 schlägt für eine Wärmepumpe ein Split-Gerät mit Innengerät 201 und Außengerät 202 vor, bei dem ein Verdichter 1 im Innengerät 201 als drehzahlvariabler Verdichter 1 vorgesehen ist. Ebenso realisiert diese Ausführungsform der Figur 2 eine Kühlung einer Elektronik, insbesondere der Elektronik zum Realisieren des drehzahlvariablen Betriebs des Verdichters 1 mittels Kältemittel. Und auch diese Ausführungsform realisiert eine Beheizung der Kondensatwanne 15 über das Kältemittel durch einen entsprechenden Wärmeübertrager 14.

Die Ausführungsform der Figur 3 ist angelehnt an die Ausführungsform der Figur 1. Auch Figur 3 zeigt eine Wärmepumpe 300 in einer Ausführung als Split-Gerät mit einem Innengerät 301 und einem Außengerät 302. Die Ausführungsform der Figur 3 unterscheidet sich von der der Figur 1 - und auch von der der Figur 2 - darin, dass ein Kühlmittelstromgleichrichter 310 vorgesehen ist. der Kühlmittelstromgleichrichter 310 ist aus vier als Rückschlagklappen ausgebildeten Ventilen aufgebaut, die erreichen, dass trotz Umschaltung in dem 4/2-Wegeumschaltventil 2 von Heizen auf Kühlen oder umgekehrt die Strömungsrichtung in der dünnen Kältemittelsplitleitung 13 als auch der dicken Kältemittelsplitleitung 20 jeweils gleich bleibt. Hierzu sind veranschaulichend einige Strömungspfeile eingezeichnet, wobei die mit H gekennzeichneten Pfeile (durchgezogene Pfeillinien) die Strömungsrichtung beim Heizen anzeigen und die mit K gekennzeichneten Pfeile (gestrichelte Pfeillinien) die Strömungsrichtung beim Kühlen anzeigen. Es ist somit zu erkennen, dass in der dünnen Kältemittelsplitleitung 13 als auch der dicken Kältemittelsplitleitung 20 das Kältemittel jeweils immer in eine Richtung strömt.

Ohne diesen Kühlstromgleichrichter 310 würde Kältemittel etwa mit einer Temperatur von beispielsweise -10°C vom Verdampfer 18 durch die dicke Kältemittelsplitleitung 20 zum inneren Gerät 301 fließen und beim Kühlen in umgekehrter Richtung durch die dicke Kältemittelsplitleitung 20 mit einer Temperatur von beispielsweise etwa 60°C fließen. Insbesondere in dem Moment eines Umschaltens vom Heizbetrieb zum Kühlbetrieb entsteht durch den hohen Temperaturunterschied ein Kondensationsproblem, bei dem das sehr warme Kältemittel 60°C in der Leitung, die noch eine Temperatur von -10°C aufweist, kondensiert. Dieses Problem tritt insbesondere aufgrund der langen Leitungslänge der dicken Kältemittelsplitleitung 20 auf, die entsprechend eine hohe Wärmekapazität schon aufgrund ihrer Länge hat.

Durch die Verwendung des Kühlstromgleichrichters 310 fließt nun im Kühlbetrieb das Kältemittel mit einer Temperatur von etwa 60°C nicht mehr durch die dicke Kältemittelsplitleitung 20, sondern durch die dünne Kältemittelsplitleitung 13. Durch die dicke Kältemittelsplitleitung 20 fließt stattdessen ein Kältemittel in Richtung zum inneren Gerät 301 mit einer Temperatur von etwa 0°C. Der Temperaturunterschied ist somit von etwa 70 K auf etwa 10 K gesunken, wodurch wesentliche Probleme der beschriebenen Kondensation beseitigt werden können. Gegebenenfalls muss die als dünne Kältemittelsplitleitung 13 bezeichnete Leitung für diesen Betrieb in Aufbau und Größe angepasst werden.

Vor dem Zurückschalten vom Kühlbetrieb in den Heizbetrieb befindet sich zunächst flüssiges Kältemittel in der dicken Kältemittelleitung 20, das nach dem Umschalten nicht vom Verdichter 1 angesaugt werden darf, um Schäden zu vermeiden. Dies kann erfindungsgemäß zum Beispiel dadurch erzielt werden, dass zunächst das Expansionsventil 17 geschlossen wird, so dass kein Kältemittel mehr in den Verdampfer 18 nachströmen kann. Das Umschalten am 4/2-Wegeventil erfolgt dann erst, nachdem die Kältemittelleitung 20 leergezogen worden ist.

Auch diese dritte Ausführungsform gemäß der Figur 3 schafft eine Wärmepumpe 300 in Form eines Split-Gerätes mit Innengerät 301 und Außengerät 302, bei der ein drehzahlgeregelter Verdichter 1 im Innengerät 301 untergebracht und betrieben wird. Auch diese Ausführungsform hält eine Kühlung der Elektronik zum Steuern bzw. Regeln des drehzahlgeregelten Verdichters bereit, wobei die Elektronik mittels Kältemittel gekühlt werden kann und das Kältemittel Energie aufnimmt, die zum Wärmen der Kondensatwanne 15 durch einen Wärmeübertrager 14 eingesetzt werden kann.

## Patentansprüche

1. Wärmepumpe (100), mit einem ein Kältemittel aufweisenden Kältemittelkreislauf umfassend
- einen Verdichter (1) zum Komprimieren des Kältemittels und/oder zum Erhöhen des Drucks des Kältemittels,
- einen Kondensator (3) zum Verflüssigen des Kältemittels,
- einen Sammelbehälter (5) der über ein Ventil (4) mit dem Kondensator verbunden ist,
- eine Drossel (17) zum Reduzieren des Drucks des Kältemittels, einen Verdampfer (18) zum Verdampfen des Kältemittels, wobei die Wärmepumpe (100)
- ein Innengerät (101) aufweist zum Installieren in einem zu beheizenden Gebäude und zum Aufnehmen des Kondensators (3) und
- ein Außengerät (102) aufweist zum Installieren außerhalb des Gebäudes und zum Aufnehmen des Verdampfers (18), wobei der Verdichter (1) im Innengerät (102) als drehzahlvariabler Verdichter (1) ausgebildet ist,
- eine Steuerelektronik umfassend einen Inverter (12) zum Steuern des Verdichters (1) vorgesehen ist,
- ein in den Kältemittelkreislauf eingebundener erster Wärmeübertrager zum Kühlen der Steuerelektronik mittels des Kältemittels vorgesehen ist,
- **dadurch gekennzeichnet, dass** ein Zwischen-Wärmeübertrager (9) für einen Hauptmassenstrom (11) und ein Expansionsventil (8) für eine Zwischeneinspritzung vorgesehen sind, wobei nach dem Sammelbehälter (5) eine Aufteilung für das Kältemittel in den Hauptmassenstrom (11) und einen weiteren Strom, der durch das Expansionsventil (8) fließt, vorgesehen ist und
- dem ersten Wärmeübertrager zum Kühlen eines elektronischen Schaltkreises des Inverters der Hauptmassenstrom (11) zugeführt wird, wobei das Kältemittel des Hauptmassenstroms (11) Wärmeenergie aus dem Inverter zur Kühlung des Inverters aufnimmt.

2. Wärmepumpe (100) nach Anspruch 1, **gekennzeichnet durch**
- eine Kondensatwanne (15) zum Auffangen von Kondensat vom Verdampfer (18) und
- einen in den Kältemittelkreislauf eingebundenen zweiten Wärmeübertrager (14) zum Wärmen der Kondensatwanne (15) mittels des Kältemittels.

3. Wärmepumpe (100) nach einem der vorstehenden Ansprüche, **dadurch gekennzeichnet, dass**
- der Verdichter (1), der Kondensator (3) und ein bzw. der erste Wärmeübertrager zum Kühlen einer bzw. der Steuerelektronik in dem Innengerät (101) angeordnet sind,
- die Drossel (17), der Verdampfer (18) und ein bzw. der zweite Wärmeübertrager (14) zum Wärmen einer bzw. der Kondensatwanne (15) in dem Außengerät (102) angeordnet sind und
- das innengerät (101) und das Außengerät (102) über eine erste und eine zweite Kältemittelleitung (13; 20) zum Führen des Kältemittels miteinander verbunden sind.

4. Wärmepumpe (100) nach einem der vorstehenden Ansprüche, **dadurch gekennzeichnet, dass**
- ein Umschalter (2) zum Umschalten von einem Heizbetrieb, in einen Kühlbetrieb vorgesehen ist, und dass
- in dem Innengerät (301) ein Strömungsgleichrichter (310) vorgesehen ist, der einen Kältemittelaustausch zwischen dem Innengerät (301) und dem Außengerät (302) so steuert, dass das Kältemittel sowohl im Heizbetrieb als auch im Kühlbetrieb zwischen dem Innengerät (301) und dem Außengerät (302) durch eine bzw. die erste Kältemittelleitung (13) immer in einer ersten und durch eine bzw. die zweite Kältemittelleitung (20) immer in einer zweiten Richtung strömt.

5. Verfahren zum Betreiben einer Wärmepumpe (100) nach einem der vorstehenden Ansprüche, wobei
- die Drossel (17) zusammen mit dem Verdampfer (18) in dem Außengerät (102) betrieben wird und
- der Verdichter (1) zusammen mit dem Kondensator (3) in dem Innengerät (101) betrieben wird und
- der Verdichter (1) drehzahlvariabel betrieben wird.

6. Verfahren nach Anspruch 5, **dadurch gekennzeichnet, dass**
- der Verdichter (1) mittels einer Steuerelektronik drehzahlvariabel betrieben wird und das Kältemittel zum Kühlen der Steuerelektronik verwendet wird.

7. Verfahren zum Installieren einer Wärmepumpe (100) nach einem der Ansprüche 1 bis 4, wobei
- das Innengerät (101) in einem Gebäude, insbesondere einem Wohngebäude installiert wird.
- das Außengerät (102) außerhalb des Gebäudes installiert wird und
- das Innengerät (101) und das Außengerät (102) über eine bzw. die erste und eine bzw. die zweite Kältemittelleitung (13; 20) zum Führen des Kältemittels miteinander verbunden werden.

## Claims

1. A heat pump (100) with a refrigerant circuit having a refrigerant, comprising
- a compressor (1) for compressing the refrigerant and/or for increasing the pressure of the refrigerant,
- a condenser (3) for liquefying the refrigerant,
- a reservoir (5) connected to the condenser via a valve (4),
- a throttle valve (17) for reducing the pressure of the refrigerant, an evaporator (18) for evaporating the refrigerant, wherein the heat pump (100) has
- an indoor unit (101) for installation inside a building to be heated and for housing the condenser (3), and has
- an outdoor unit (102) for installation outside the building and for housing the evaporator (18), wherein the compressor (1) is configured as a variable speed compressor (1) inside the indoor unit (102),
- wherein a control electronics assembly comprising an inverter (12) is provided for controlling the compressor (1),
- wherein a first heat exchanger incorporated in the refrigerant circuit is provided for cooling the control electronics assembly by means of the refrigerant,
- **characterised in that** an intermediate heat exchanger (9) for a primary mass flow (11) and an expansion valve (8) for an intermediate injection are provided, wherein means for dividing the refrigerant into the primary mass flow (11) and a further flow, which flows through the expansion valve (8), are provided downstream of the reservoir (5), and
- the primary mass flow (11) is supplied to the first heat exchanger for cooling an electronic circuit of the inverter, wherein the refrigerant of the primary mass flow (11) absorbs thermal energy from the inverter to cool the inverter.

2. The heat pump (100) according to claim 1, **characterised by**
- a condensate pan (15) for collecting condensate from the evaporator (18), and
- a second heat exchanger (14) incorporated in the refrigerant circuit for heating the condensate pan (15) by means of the refrigerant.

3. The heat pump (100) according to one of the preceding claims, **characterised in that**
- the compressor (1), the condenser (3) and one or the first heat exchanger are arranged for cooling a or the control electronics assembly within the indoor unit (101),
- the throttle valve (17), the evaporator (18) and one or the second heat exchanger (14) are arranged for heating a or the condensate pan (15) within the outdoor unit (102), and
- the indoor unit (101) and the outdoor unit (102) are interconnected via a first and a second refrigerant line (13; 20) for conducting the refrigerant.

4. The heat pump (100) according to one of the preceding claims, **characterised in that**
- a switch (2) for switching from a heating mode to a cooling mode is provided, and **in that**
- a flow rectifier (310) is provided within the indoor unit (301), which controls a refrigerant exchange between the indoor unit (301) and the outdoor unit (302) such that, both in heating mode and in cooling mode, the refrigerant always flows between the indoor unit (301) and the outdoor unit (302) in a first direction through one or the first refrigerant line (13) and always in a second direction through one or the second refrigerant line (20).

5. A method of operating a heat pump (100) according to one of the preceding claims, wherein
- the throttle valve (17) is operated in combination with the evaporator (18) in the outdoor unit (102), and
- the compressor (1) is operated in combination with the condenser (3) in the indoor unit (101), and
- the compressor (1) is operated at variable speed.

6. The method according to claim 5, **characterised in that**
- the compressor (1) is operated at variable speed by means of a control electronics assembly and the refrigerant is used for cooling the control electronics assembly.

7. A method of installing a heat pump (100) according to one of claims 1 to 4, wherein
- the indoor unit (101) is installed in a building, specifically a residential building.
- the outdoor unit (102) is installed outside the building, and
- the indoor unit (101) and the outdoor unit (102) are interconnected via one or the first and one or the second refrigerant line (13; 20) for conducting the refrigerant.

## Revendications

1. Pompe à chaleur (100) avec un circuit frigorifique présentant un fluide frigorigène, comprenant
- un compresseur (1) pour comprimer le fluide frigorigène et/ou pour augmenter la pression du fluide frigorigène,
- un condenseur (3) pour condenser le fluide frigorigène,
- un collecteur (5) relié au condenseur par une vanne (4),
- un restricteur (17) pour réduire la pression du fluide frigorigène, un évaporateur (18) pour évaporer le fluide frigorigène, la pompe à chaleur (100) présentant
- un appareil intérieur (101) à installer dans un bâtiment à chauffer et pour loger le condenseur (3), et
- un appareil extérieur (102) à installer en dehors du bâtiment et pour loger l'évaporateur (18), le compresseur (1) étant réalisé dans l'appareil intérieur (102) comme un compresseur (1) à régime variable,
- une électronique de commande comprenant un inverter (12)
étant prévue pour commander le compresseur (1),
- un premier échangeur de chaleur intégré dans le circuit frigorifique est prévu pour refroidir l'électronique de commande au moyen du fluide frigorigène,
- **caractérisé en ce qu'**un échangeur de chaleur intermédiaire (9) est prévu pour un flux massique principal (11) et un détendeur (8) pour une injection intermédiaire, une répartition étant prévue en aval du collecteur (5) pour le fluide frigorigène dans le flux massique principal (11) et pour un autre flux qui s'écoule à travers le détendeur (8), et
- le flux massique principal (11) est amené au premier échangeur de chaleur pour refroidir un circuit de commutation électronique de l'inverter,
le fluide frigorigène du flux massique principal (11) absorbant de l'énergie thermique provenant de l'inverter pour refroidir l'inverter.

2. Pompe à chaleur (100) selon la revendication 1, **caractérisée par**
- un bac à condensats (15) pour récupérer les condensats de l'évaporateur (18) et
- un deuxième échangeur de chaleur (14) intégré dans le circuit frigorifique pour chauffer le bac à condensats (15) au moyen du fluide frigorigène.

3. Pompe à chaleur (100) selon l'une quelconque des revendications précédentes, **caractérisée en ce que**
- le compresseur (1), le condenseur (3) et un/ou le premier échangeur de chaleur pour le refroidissement d'une/ou de l'électronique de commande sont disposés dans l'appareil intérieur (101),
- le restricteur (17), l'évaporateur (18) et un/ou le deuxième échangeur de chaleur (14) pour le chauffage d'un/ou du bac à condensats (15) sont disposés dans l'appareil extérieur (102), et
- l'appareil intérieur (101) et l'appareil extérieur (102) sont reliés l'un à l'autre par une première et une deuxième conduites de fluide frigorigène (13 ; 20) pour acheminer le fluide frigorigène.

4. Pompe à chaleur (100) selon l'une quelconque des revendications précédentes, **caractérisée en ce que**
- un commutateur (2) est prévu pour commuter depuis un mode de chauffage dans un mode de refroidissement, et **en ce que**
- dans l'appareil intérieur (301) est prévu un redresseur de flux (310) qui commande un échange de fluide frigorigène entre l'appareil intérieur (301) et l'appareil extérieur (302) de sorte que le fluide frigorigène s'écoule en mode de chauffage comme en mode de refroidissement entre l'appareil intérieur (301) et l'appareil extérieur (302) toujours dans une première direction à travers une et/ou la première conduite de fluide frigorigène (13) et toujours dans une deuxième direction à travers une/ou la deuxième conduite de fluide frigorigène (20).

5. Procédé d'exploitation d'une pompe à chaleur (100) selon l'une quelconque des revendications précédentes,
- le restricteur (17) étant exploité conjointement à l'évaporateur (18) dans l'appareil extérieur (102), et
- le compresseur (1) étant exploité conjointement au condenseur (3) dans l'appareil intérieur (101) et
- le compresseur (1) étant exploité à un régime variable.

6. Procédé selon la revendication 5, **caractérisé en ce que**
- le compresseur (1) est exploité à un régime variable au moyen d'une électronique de commande et le fluide frigorigène est utilisé pour refroidir l'électronique de commande.

7. Procédé d'installation d'une pompe à chaleur (100) selon l'une quelconque des revendications 1 à 4,
- l'appareil intérieur (101) étant installé dans un bâtiment, en particulier dans un bâtiment résidentiel,
- l'appareil extérieur (102) étant installé à l'extérieur du bâtiment, et
- l'appareil intérieur (101) et l'appareil extérieur (102) étant reliés l'un à l'autre par une/ou la première et par une/ou la deuxième conduites de fluide frigorigène (13 ; 20) pour acheminer le fluide frigorigène.
